(19) Europäisches Patentamt / European Patent Office / Office européen des brevets

(11) **EP 2 434 752 B1**

(12) **FASCICULE DE BREVET EUROPEEN**

(45) Date de publication et mention
de la délivrance du brevet:
**10.01.2018 Bulletin 2018/02**

(51) Int Cl.:
***H04N 5/365*** *(2011.01)*   ***H04N 5/325*** *(2006.01)*

(21) Numéro de dépôt: **11182187.2**

(22) Date de dépôt: **21.09.2011**

(54) **Procédé de détermination et de correction de la stabilité de réponse d'un détecteur matriciel à semi-conducteur**

Verfahren zur Feststellung und Korrektur der Reaktionsstabilität eines Halbleiter-Matrixdetektors

Method for determining and correcting the response stability of a semi-conductor matrix detector

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.09.2010 FR 1057769**

(43) Date de publication de la demande:
**28.03.2012 Bulletin 2012/13**

(73) Titulaire: **COMMISSARIAT À L'ÉNERGIE ATOMIQUE ET AUX ÉNERGIES ALTERNATIVES
75015 Paris (FR)**

(72) Inventeurs:
 • **Glasser, Francis
  38320 EYBENS (FR)**
 • **Verger, Loïck
  38000 GRENOBLE (FR)**

(74) Mandataire: **Bréda, Jean-Marc et al
Marks & Clerk France
Conseils en Propriété Industrielle
Immeuble " Visium "
22 Avenue Aristide Briand
94117 Arcueil Cedex (FR)**

(56) Documents cités:
 **EP-A1- 1 006 719   EP-A2- 1 795 918**

 • **ARODZERO A ET AL: "A System for the Characterization and Testing of CdZnTe/CdTe Pixel Detectors for X-ray and Gamma-ray Imaging", NUCLEAR SCIENCE SYMPOSIUM CONFERENCE RECORD, 2006. IEEE, PISCATAWAY, NJ, USA, PISCATAWAY, NJ, USA, 29 octobre 2006 (2006-10-29), pages 3638-3642, XP031606412, ISBN: 978-1-4244-0560-2**
 • **UWE HAMPEL ET AL: "Application of CdTe and CZT detectors in ultra fast electron beam X-ray tomography", NUCLEAR SCIENCE SYMPOSIUM CONFERENCE RECORD, 2008. NSS '08. IEEE (19-25 OCT. 2008), IEEE, PISCATAWAY, NJ, USA, 19 octobre 2008 (2008-10-19), pages 96-99, XP031419401, ISBN: 978-1-4244-2714-7**
 • **BOGDANOVICH S ET AL: "Temporal response of czt detectors under intense irradiation", IEEE TRANSACTIONS ON NUCLEAR SCIENCE, IEEE SERVICE CENTER, NEW YORK, NY, US, vol. 50, no. 4, 1 août 2003 (2003-08-01), pages 1031-1035, XP011099802, ISSN: 0018-9499, DOI: DOI:10.1109/TNS.2003.815348**

**Description**

Le domaine de l'invention est celui des imageurs de type semi-conducteur et plus particulièrement celui des imageurs de rayonnement X ou gamma.

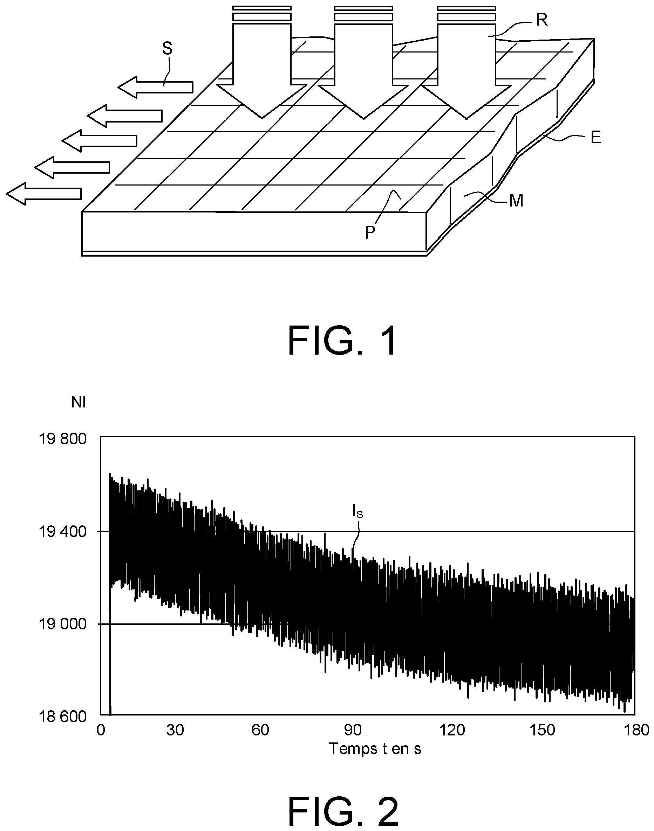

Un imageur de type semi-conducteur est représenté en figure 1. Il comporte généralement un matériau détecteur M, dont une première face comporte un grand nombre de pixels P qui peut être compris entre quelques milliers et quelques millions généralement disposés sous forme matricielle et une deuxième face comportant une grande électrode E permettant de polariser le détecteur. Lorsque le détecteur est irradié par un rayonnement R généralement de très basse longueur d'onde, chaque pixel P mesure un signal S représentant l'énergie cédée dans le matériau détecteur par les interactions entre le rayonnement et le matériau détecteur ayant eu lieu dans une zone du détecteur située face à ce pixel.

Dans de tels détecteurs, la réponse des pixels n'est pas homogène. Autrement dit, deux pixels du même détecteur soumis à un rayonnement identique peuvent produire deux signaux d'amplitude différente. On parle également d'hétérogénéité spatiale de réponse. Cette hétérogénéité a plusieurs causes. On citera notamment des caractéristiques de détection du matériau détecteur variables spatialement, des pixels pouvant avoir des différences de sensibilité les uns par rapport aux autres. Lorsque cette hétérogénéité est stable dans le temps, elle se corrige habituellement soit par une simple correction de gain et d'offset, soit par une fonction plus compliquée de type polynomiale.

Une seconde cause importante de l'hétérogénéité peut être une instabilité temporelle ou dérive de la réponse des détecteurs. L'origine de ce type de dérive peut provenir d'une forte irradiation qui modifie localement, par l'apparition d'une charge d'espace, le champ électrique interne du matériau. Ainsi, plus les détecteurs sont soumis à une quantité importante de rayonnement intégré, plus l'hétérogénéité spatiale de réponse évolue, et cela d'une façon dépendante de l'historique d'irradiation.

De plus, au cours d'une même acquisition, la sensibilité du pixel, c'est-à-dire le signal délivré en fonction du flux de rayonnement incident peut varier. Il existe ainsi des pixels stables dont la sensibilité n'évolue pas avec le temps et des pixels instables dont la sensibilité évolue avec le temps. A titre d'exemple, la figure 2 représente l'évolution dans le temps sur une durée de plusieurs centaines de secondes de l'amplitude $I_S$ du signal S d'un pixel mesurée en nombre d'impacts NI enregistrés durant une période temporelle donnée, ou période de comptage ou temps d'acquisition. Dans le cas de la figure 2, le temps d'acquisition vaut 0.2 seconde, et on procède à une irradiation du détecteur d'une durée d'environ 180 secondes. Chaque point de la courbe correspond au nombre de coups détectés par le détecteur pendant une période de 2 ms. Le nombre de coups, ou interactions détectées, vaut environ 19400 en début d'irradiation, c'est-à-dire avec un temps t proche de 0 seconde, et diminue lentement avec le temps d'irradiation. Au bout d'une irradiation de 3 minutes, le nombre de coups vaut alors moins de 19000. Cette figure a été obtenue en exposant un pixel de CdTe, de dimensions $200 \mu m * 200 \mu m$ et d'épaisseur 1.5 mm, par un faisceau de rayons X, délivrant un débit de fluence, au niveau du détecteur, de $3.10^8$ photons.mm$^2$.s$^{-1}$. Ce phénomène est du à l'apparition de zones de charges d'espace dans un détecteur soumis à une irradiation. Ces zones de charge d'espace abaissent le champ électrique de polarisation, ce qui a pour effet un abaissement de la sensibilité, d'où un moindre nombre d'interactions détectées. Il s'agit d'un phénomène progressif, entraînant une polarisation du détecteur spatialement et temporellement fluctuante.

Par conséquent, la sensibilité d'un détecteur matriciel varie à la fois spatialement et temporellement. Ainsi, au cours d'une même acquisition, l'hétérogénéité spatiale de la réponse évolue et ce phénomène est également peu prévisible. Il n'existe actuellement pas de solutions permettant de résoudre ce problème de façon satisfaisante hormis le fait de supprimer les niveaux pièges responsables de l'apparition de la charge d'espace dans le matériau semi-conducteur. Ceci permet de minimiser le problème, mais il reste des zones plus ou moins stables. Ce problème est important dans la mesure où, dans certaines applications telle que la tomographie X, le critère de stabilité est primordial pour éviter des artefacts dans les images.

Le procédé selon l'invention permet d'éliminer ou de limiter en grande partie ces inconvénients. L'invention est un procédé de détermination de la stabilité de réponse du détecteur. En d'autres termes, le procédé selon l'invention permet de cartographier les variations de réponse d'un détecteur matriciel pixellisé au cours du temps. Ce procédé permet notamment d'identifier les pixels dont la réponse est particulièrement stable avec le temps, dits « pixels stables » ou « pixels de référence » et ceux qui ne le sont pas dits « pixels instables ». Le procédé permet également la correction de la stabilité de réponse du détecteur au cours d'une exposition.

L'invention concerne également un dispositif de détection présentant des moyens permettant de mettre en oeuvre ce procédé de détermination et de correction de l'instabilité de réponse.

Plus précisément, l'invention a pour objet un procédé de contrôle de la stabilité de réponse d'un imageur matriciel à semi-conducteur composé de pixels, ledit procédé comportant au moins une première phase de caractérisation de ladite stabilité, caractérisé en ce que ladite première phase comporte les étapes suivantes :

- Irradiation des pixels du détecteur par un rayonnement étalon constant dans le temps pendant une durée prédéterminée ;

- Mémorisation des signaux délivrés par chaque pixel à intervalles de temps réguliers pendant ladite durée prédéterminée ;
- Détermination, pour chaque pixel, d'une distribution en amplitude des signaux délivrés par chaque pixel ;
- Caractérisation de chaque distribution par au moins un indicateur statistique représentatif de la dispersion de ladite distribution ;
- Classement de chaque pixel, à partir de cet indicateur, en au moins deux catégories de pixels, chaque catégorie étant représentative de la stabilité de la réponse temporelle des pixels, les pixels appartenant à la première catégorie étant notés « pixels stables », les pixels appartenant à la seconde catégorie étant notés « pixels instables ».

Avantageusement, ledit procédé comporte au moins une seconde phase de correction de ladite stabilité comportant les étapes suivantes :

- Association de chaque pixel instable avec au moins un pixel stable selon un critère prédéterminé ;
- Irradiation des pixels du détecteur par un rayonnement à caractériser ;
- Mémorisation des signaux délivrés par chaque pixel pendant au moins un intervalle de temps pris durant ladite durée prédéterminée ;
- Correction du ou des signaux générés par chaque pixel instable en fonction du ou des signaux générés par le pixel stable auquel ledit pixel instable est associé.

Avantageusement, la distribution en amplitude de chaque pixel n est un histogramme $D_n$ centré sur une valeur moyenne $\mu_n$, l'indicateur statistique étant un écart type $s_n$.

Avantageusement, le classement d'un pixel dans une catégorie de pixels est réalisé selon que la valeur du rapport $s_n/\mu_n$ est inférieure à un seuil prédéterminé.

Avantageusement, la matrice est décomposée en mailles élémentaires comprenant un nombre prédéterminé de pixels, le pixel de ladite maille ayant la valeur du rapport $s_n/\mu_n$ la plus faible appartenant à la première catégorie de pixels, les autres pixels de la maille appartenant à la seconde catégorie de pixels.

Avantageusement, le critère prédéterminé est soit la distance la plus faible séparant le pixel instable du plus proche pixel stable, soit l'appartenance à une même maille.

Avantageusement, la correction du signal généré par chaque pixel instable est assurée en multipliant ledit signal dudit pixel instable par un coefficient constant proportionnel au signal délivré par le pixel stable auquel ledit pixel instable est associé. Elle peut être également assurée, pendant un intervalle de temps donné, en multipliant ledit signal dudit pixel instable par un coefficient proportionnel à la valeur moyenne du signal délivré par le pixel stable auquel ledit pixel instable est associé pendant le même intervalle de temps. EP1 795 918 A2 décrit un procédé pour corriger l'uniformité de chaque pixel d'un détecteur. Dans une première phase, des pixels sont classés en deux catégories "mauvais pixels" et "bons pixels". Les mauvais pixels sont associés avec les bons pixels adjacents. EP1 795 918 A2 ne décrit pas la caractérisation de la distribution en amplitude des pixels pendant l'irradiation des pixels par un indicateur statistique représentatif de la dispersion de ladite distribution. L'invention sera mieux comprise et d'autres avantages apparaîtront à la lecture de la description qui va suivre donnée à titre non limitatif et grâce aux figures annexées parmi lesquelles :

La figure 1 déjà commentée représente le principe de fonctionnement d'un imageur matriciel ;

La figure 2 également commentée représente les variations dans le temps d'un signal de sortie d'un pixel d'un imageur matriciel ;

La figure 3 représente les principales étapes de la première phase du procédé de contrôle de la stabilité de réponse d'un imageur matriciel à selon l'invention ;

La figure 4 représente un exemple de distribution en amplitude des signaux délivrés par un pixel pour un même signal au cours du temps ;

La figure 5 représente les principales étapes de la seconde phase du procédé de contrôle de la stabilité de réponse d'un imageur matriciel à selon l'invention ;

La figure 6 représente deux exemples d'association d'un pixel instable avec un pixel stable.

Le procédé de contrôle de la stabilité de réponse d'un imageur matriciel à semi-conducteur composé de pixels comporte deux phases distinctes, une première phase de caractérisation de la stabilité des pixels et une seconde phase de correction des signaux des pixels de façon à obtenir des mesures correctes en sortie de l'imageur.

De façon préférentielle, le matériau détecteur de l'imageur est un semi-conducteur, réalisé par exemple à l'aide d'un matériau de type CdZnTe ou CdTe, d'autres types de matériaux semi-conducteurs connus de l'homme du métier étant utilisables. Le matériau semi-conducteur est de forme parallélépipédique. L'épaisseur du matériau est comprise entre quelques centaines de microns et quelques millimètres. Sa surface est de taille variable suivant l'application et vaut généralement quelques $cm^2$. Naturellement, l'invention s'applique également à d'autres détecteurs de rayonnement pixellisés, et en particulier à ceux basés sur un matériau scintillateur couplé à une matrice de photo-détecteurs.

Une première face de ce détecteur est constituée de pixels agencés selon une matrice. Par pixel, on entend une électrode déposée sur le matériau, polarisée de façon à collecter des porteurs de charges, en l'occurrence des électrons, cette électrode étant raccordée à des moyens de traitement du signal. Chaque électrode de cette première face, ou anode, est reliée à des moyens de traitement du signal collecté, moyens connus de l'homme du métier, de façon que l'amplitude du signal détecté par l'électrode dépende de l'énergie déposée dans le détecteur par le rayonnement incident.

Une seconde face de ce détecteur est constituée d'une ou plusieurs électrodes, les cathodes, polarisées à un potentiel inférieur à celui des anodes.

Ainsi, le dispositif de détection comprend :

- le bloc-détecteur comportant le matériau détecteur et les différentes électrodes ;
- des moyens de polarisation des différentes anodes et cathodes du détecteur ;
- des moyens de traitement du signal délivré par chaque anode.

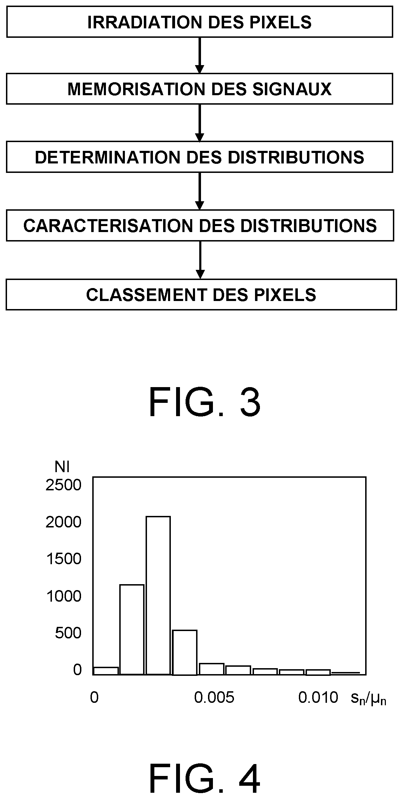

Les étapes de la première phase du procédé selon l'invention sont représentées en figure 3 et détaillées ci-dessous.

Dans une première étape, on soumet le détecteur à un rayonnement constant dans le temps et de préférence homogène. On irradie le détecteur de façon que chaque pixel soit soumis à un flux photonique incident constant durant cette période d'irradiation, et de préférence spatialement homogène. Par flux photonique, on entend un rayonnement X ou gamma, préférentiellement un rayonnement X. La source de rayonnement peut alors être un générateur de rayons X tel qu'utilisé par exemple dans un scanner médical dont les caractéristiques de puissance sont une tension de 120 kV et un courant de 100mA. Par sensiblement homogène, on entend un rayonnement produisant un débit de fluence, c'est-à-dire un nombre de photons par unité de surface et de temps constant à quelques pourcents près sur la seconde face du détecteur. Le débit de fluence est choisi suffisamment élevé pour que des instabilités de la réponse des différents pixels puissent apparaître. A titre d'exemple, le flux peut être de l'ordre de $10^9$ photons/s.mm$^2$.

Durant l'irradiation, les pixels du détecteur génèrent des signaux, à intervalles de temps réguliers, et on peut obtenir, pour chaque pixel, la variation d'amplitude du signal détecté en fonction du temps. Dans une seconde étape, on mémorise ces signaux pour l'ensemble des pixels. Les mesures successives peuvent être entreprises selon une moyenne glissante. Elles ont généralement une durée comprise entre une seconde et quelques minutes. La fréquence d'échantillonnage, définissant l'intervalle temporel séparant deux signaux successifs produits par un même pixel, est de quelques centaines de microsecondes.

Ainsi, chaque pixel produit des signaux successifs, d'amplitude variable, au cours de la période d'irradiation sous flux constant. On peut alors, dans une troisième étape, déterminer, pour chaque pixel n, une distribution en amplitude Dn, sous la forme d'un histogramme, représentant le nombre d'occurrences de signaux en fonction de l'amplitude. Cette distribution se présente sous la forme d'un pic, centré sur une valeur moyenne $\mu_n$, dont on peut extraire un indicateur statistique, par exemple un écart type $s_n$, ce dernier correspondant à la largeur à mi-hauteur divisée par 2.35 dans le cas ou la distribution suit une loi de probabilité gaussienne. La figure 4 représente un tel histogramme dans lequel le nombre d'occurrences NI est représenté en en fonction du rapport $s_n/\mu_n$.

Dans une quatrième étape, on caractérise chaque distribution par un indicateur représentatif de la stabilité temporelle de la réponse du pixel. On peut prendre comme indicateur, par exemple, la largeur à mi hauteur de l'histogramme.

Enfin, dans une cinquième étape, on catégorise chaque pixel n en fonction de la valeur prise par l'indicateur précédent. Par stabilité temporelle de réponse, on entend la variation de l'amplitude des signaux produits par ce pixel lorsqu'il est exposé à un rayonnement constant. Par exemple un pixel est considéré comme stable si $s_n/\mu_n$ est inférieur à une valeur seuil (par exemple : 0.005). Si $s_n/\mu_n$ est supérieur à ce seuil, le pixel est considéré comme instable.

On peut, bien entendu, envisager un plus grand nombre de catégories de façon par exemple à éliminer les pixels très instables ou ayant une réponse aberrante. On peut également déterminer, sur un groupe de pixels donné, celui qui est « le plus stable », en fonction de la valeur prise par cet indicateur. Ce pixel le plus stable est considéré comme un pixel stable.

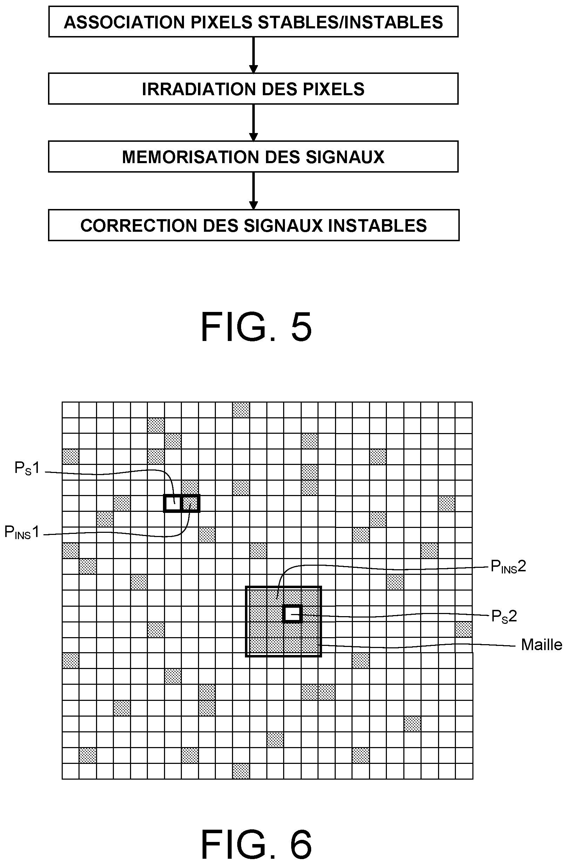

Cette catégorisation des pixels réalisée, il est possible de passer aux étapes de la seconde phase du procédé selon l'invention. Ces étapes sont représentées en figure 5 et détaillées ci-dessous.

Dans une première étape, on lie chaque pixel instable du détecteur à un pixel stable que l'on peut également appelé pixel de référence. Par « lié », on entend une liaison imaginaire, basée par exemple sur un critère de position relative et sur l'indicateur de stabilité précédemment déterminé.

A titre de premier exemple illustré en figure 6 et représentant les pixels d'une matrice de détection, chaque pixel instable $P_{INS}1$ est relié au pixel stable $P_S1$ géographiquement le plus proche.

A titre de second exemple également en figure 6, on peut également diviser virtuellement la matrice de pixels en mailles, chaque maille regroupant un nombre prédéterminé de pixels. Dans ce cas, dans chaque maille, on détermine le pixel le plus stable $P_S2$ qui est ensuite considéré comme le pixel stable de la maille, auquel les autres pixels $P_{INS}2$ de la même maille, considérés alors comme instables, sont liés. Chaque maille peut être un quadrilatère, avantageusement carré, comprenant alors $p^2$ pixels. Les mailles sont généralement de petite dimension comprenant tout au plus 25 pixels par maille. Sur la figure 6, la maille est un carré de 16 pixels comportant donc un pixel « stable » et 15 pixels dits « instables ».

Lorsque ce maillage a été réalisé, le dispositif de détection est prêt à être utilisé dans des conditions de mesure, c'est-à-dire exposé à un rayonnement incident inconnu. Dans une seconde étape, on irradie donc le détecteur avec le rayonnement à mesurer pendant une seconde durée prédéterminée. Cette seconde durée n'est pas nécessairement égale à la première durée prédéterminée, nécessaire à l'étalonnage des pixels et à la détermination des pixels stables et des pixels instables.

Dans une troisième étape, on détermine l'amplitude du signal délivré par chaque pixel au cours du temps. De façon générale, la mémorisation des signaux délivrés par chaque pixel est effectuée pendant plusieurs intervalles de temps pris durant ladite seconde durée prédéterminée.

Enfin, dans une quatrième étape, on corrige le signal généré par chaque pixel instable en fonction du signal généré par le pixel stable auquel ledit pixel instable est lié. De préférence, la correction est réalisée en multipliant le signal généré par un pixel instable par un facteur de correction combinant des moyennes temporelles de signaux respectivement générés par le pixel instable et le pixel stable auquel le pixel instable est lié.

Dans ce qui suit, on notera $S_{instable}(t)$ le signal issu d'un pixel instable avant correction, $S^*_{instable}(t)$ le signal issu d'un pixel instable après correction et $S_{stable}(t)$ le signal issu du pixel stable associé, t représentant le temps. On notera également k le facteur de correction tel que :

$$S^*_{instable}(t) = k^* \, S_{instable}(t)$$

A titre de premier exemple de correction, on peut simplement substituer au signal $S_{instable}(t)$ le signal $S_{stable}(t)$ associé. On a dans ce cas :

$$S^*_{instable}(t) = S_{stable}(t)$$

Dans ce cas, k vaut $S_{stable}(t) \, / \, S_{instable}(t)$

A titre de second exemple, on peut corriger les variations du signal instable $S_{instable}(t)$ en fonction du temps en substituant les variations du signal stable à celles du signal instable. On a alors :

$$S^*_{instable}(t) = S_{instable}(t0)^*( \, S_{stable}(t) \, /S_{stable}(t0))$$

t0 étant, par exemple, l'instant initial auquel les mesures ont commencé.

A titre de troisième exemple, on peut utiliser comme source de correction des moyennes glissantes de signaux, ces moyennes étant réalisées sur un intervalle temporel $\Delta t$ qui peut être de quelques centaines de millisecondes à quelques secondes. Ces moyenne sont notées $M_{stable}(t)$ pour les signaux stables et $M_{instable}(t)$ pour les signaux instables. On a les relations :

$$M_{stable}(t) = \int_{t}^{t+\Delta t} S_{stable}(t) \Big/ \Delta t \ \text{ et } M_{instable}(t) = \int_{t}^{t+\Delta t} S_{instable}(t) \Big/ \Delta t$$

Dans ce cas, le signal S (t) de chaque pixel instable est corrigé de la façon suivante :

$$S^*_{instable}(t) = S_{instable}(t) \, ^* \, M_{stable}(t) \, / \, M_{instable}(t)$$

Ainsi, chaque signal issu de chaque pixel instable est affecté d'un facteur de correction k dépendant de la position du pixel instable dans le détecteur et variant avec le temps. Il s'agit donc d'un facteur de correction évolutif, c'est-à-dire variant au cours d'une même exposition du détecteur, ce qui constitue un point particulièrement avantageux. De plus, ce facteur de correction dépend du pixel stable situé à proximité du pixel instable. Autrement dit, cet indicateur est spatialisé. Ce pixel stable ou pixel de référence ayant été soumis au même historique d'irradiation, un tel facteur de correction est particulièrement approprié.

Cette correction est d'autant plus efficace, que la pixellisation du détecteur est importante vis-à-vis de la résolution spatiale du système. Dans ce cas, deux pixels proches voient physiquement le même rayonnement incident. Cette pixellisation importante peut se justifier par ailleurs pour mesurer des forts flux comme c'est le cas de scanners X. Le nombre de photons incidents est divisé par une multitude de pixels, ce qui réduit le flux maximum à mesurer pour chaque voie électronique.

La correction du signal de chaque pixel instable est particulièrement efficace en début d'irradiation. En effet, lorsque la période d'irradiation dure trop longtemps, par exemple au-delà de quelques dizaines de minutes, des effets non linéaires peuvent apparaître, rendant une correction plus aléatoire. Il est alors utile de dépolariser le détecteur, puis de le repolariser avant de procéder à une nouvelle irradiation du détecteur.

On sait que la perte de sensibilité affectant chaque pixel au cours d'une irradiation peut être, en quelque sorte, annulée, en dépolarisant le matériau semi-conducteur. Ainsi, après un cycle dépolarisation - polarisation, chaque pixel retrouve la sensibilité qu'il avait après le précédent cycle. Autrement dit, la sensibilité de chaque pixel, après un cycle dépolarisation - polarisation, et avant toute irradiation, n'évolue pratiquement pas. Il peut alors être avantageux, après une ou plusieurs période d'irradiation, de procéder à une dépolarisation puis à une repolarisation. Les corrections précédemment décrites sont alors rendues plus efficaces.

**Revendications**

1. Procédé de contrôle de la stabilité de réponse d'un imageur matriciel à semi-conducteur composé de pixels (P), ledit procédé comportant au moins une première phase de caractérisation de ladite stabilité et une seconde phase de correction de ladite stabilité, **caractérisé en ce que** ladite première phase comporte les étapes suivantes :

   - Irradiation des pixels du détecteur par un rayonnement étalon constant dans le temps pendant une durée prédéterminée ;
   - Mémorisation des signaux (S) délivrés par chaque pixel à intervalles de temps réguliers pendant ladite durée prédéterminée ;
   - Détermination, pour chaque pixel, d'une distribution en amplitude des signaux délivrés par chaque pixel durant ladite durée prédéterminée ;
   - Caractérisation de chaque distribution par au moins un indicateur statistique représentatif de la dispersion de ladite distribution ;
   - Classement de chaque pixel, à partir de cet indicateur, en au moins deux catégories de pixels, chaque catégorie étant représentative de la stabilité de la réponse temporelle des pixels, les pixels appartenant à la première catégorie étant notés « pixels stables », les pixels appartenant à la seconde catégorie étant notés « pixels instables ».

   la seconde phase comporte les étapes suivantes :

   - Association de chaque pixel instable avec au moins un pixel stable selon un critère prédéterminé ;
   - Irradiation des pixels du détecteur par un rayonnement à caractériser pendant une seconde durée prédéterminée;
   - Mémorisation des signaux délivrés par chaque pixel pendant au moins un intervalle de temps pris durant ladite seconde durée prédéterminée ;
   - Correction du ou des signaux générés par chaque pixel instable en fonction du ou des signaux générés par le pixel stable auquel ledit pixel instable est associé.

2. Procédé de contrôle de la stabilité de réponse d'un imageur matriciel à semi-conducteur composé de pixels selon la revendication 1, **caractérisé en ce que** la matrice est décomposée en mailles élémentaires comprenant un nombre prédéterminé de pixels, le procédé comporte une étape de détermination du pixel le plus stable dans chaque maille de telle sorte que les autres pixels de ladite maille, considérés comme instables, sont liés audit pixel.

3. Procédé de contrôle de la stabilité de réponse d'un imageur matriciel à semi-conducteur composé de pixels selon la revendication 1, **caractérisé en ce que** la distribution en amplitude de chaque pixel n est un histogramme $D_n$ centré sur une valeur moyenne $\mu_n$, l'indicateur statistique étant un écart type $s_n$.

4. Procédé de contrôle de la stabilité de réponse d'un imageur matriciel à semi-conducteur composé de pixels selon la revendication 3, **caractérisé en ce que** le classement d'un pixel dans une catégorie de pixels est réalisé selon que la valeur du rapport $s_n/\mu_n$ est inférieur à un seuil prédéterminé.

5. Procédé de contrôle de la stabilité de réponse d'un imageur matriciel à semi-conducteur composé de pixels selon la revendication 3, **caractérisé en ce que** la matrice est décomposée en mailles élémentaires comprenant un nombre prédéterminé de pixels, le pixel de ladite maille ayant la valeur du rapport $s_n/\mu_n$ la plus faible appartenant à la première catégorie de pixels, les autres pixels de la maille appartenant à la seconde catégorie de pixels.

6. Procédé de contrôle de la stabilité de réponse d'un imageur matriciel à semi-conducteur composé de pixels selon la revendication 1, **caractérisé en ce que** le critère prédéterminé est la distance la plus faible séparant le pixel instable du plus proche pixel stable.

7. Procédé de contrôle de la stabilité de réponse d'un imageur matriciel à semi-conducteur composé de pixels selon les revendications 1 et 5, **caractérisé en ce que** le critère prédéterminé est l'appartenance à une même maille.

8. Procédé de contrôle de la stabilité de réponse d'un imageur matriciel à semi-conducteur composé de pixels selon l'une des revendications 1, 6 ou 7, **caractérisé en ce que** la correction du signal généré par chaque pixel instable est assurée en multipliant ledit signal dudit pixel instable par un coefficient constant proportionnel au signal délivré par le pixel stable auquel ledit pixel instable est associé.

9. Procédé de contrôle de la stabilité de réponse d'un imageur matriciel à semi-conducteur composé de pixels selon l'une des revendications 1, 6 ou 7, **caractérisé en ce que** la correction du signal généré par chaque pixel instable pendant un intervalle de temps donné est assurée en multipliant ledit signal dudit pixel instable par un coefficient proportionnel à la valeur moyenne du signal délivré par le pixel stable auquel ledit pixel instable est associé pendant le même intervalle de temps.

**Patentansprüche**

1. Verfahren zum Prüfen der Reaktionsstabilität eines Halbleiter-Matrixbildgebers bestehend aus Pixeln (P), wobei das Verfahren wenigstens eine erste Phase des Charakterisierens der Stabilität und eine zweite Phase des Korrigierens der Stabilität beinhaltet, **dadurch gekennzeichnet, dass** die erste Phase die folgenden Schritte beinhaltet:

- Bestrahlen der Pixel des Detektors mit einem zeitlich konstanten Standardstrahl für eine vorbestimmte Dauer;
- Speichern der von jedem Pixel in gleichmäßigen Zeitintervallen während der vorbestimmten Dauer gelieferten Signale (S);
- Bestimmen, für jedes Pixel, einer Amplitudeverteilung der von jedem Pixel während der vorbestimmten Dauer gelieferten Signale;
- Charakterisieren jeder Verteilung durch wenigstens einen statistischen Indikator, der die Streuung der Verteilung repräsentiert;
- Einordnen jedes Pixels auf der Basis dieses Indikators in wenigstens zwei Pixelkategorien, wobei jede Kategorie die Stabilität des Zeitverhaltens der Pixel repräsentiert, wobei die zur ersten Kategorie gehörenden Pixel als "stabile Pixel" bezeichnet werden, wobei die zur zweiten Kategorie gehörenden Pixel als "instabile Pixel" bezeichnet werden;

wobei die zweite Phase die folgenden Schritte beinhaltet:

- Assozüeren jedes instabilen Pixels mit wenigstens einem stabilen Pixel gemäß einem vorbestimmten Kriterium;
- Bestrahlen der Pixel des Detektors mit einer zu charakterisierenden Strahlung während einer zweiten vorbestimmten Dauer;
- Speichern der von jedem Pixel während wenigstens einem Zeitintervall gelieferten Signale, genommen während der zweiten vorbestimmten Dauer;
- Korrigieren der ein oder mehreren von jedem instabilen Pixel erzeugten Signale in Abhängigkeit von den ein oder mehreren von dem stabilen Pixel erzeugten Signalen, mit dem das instabile Pixel assoziiert ist.

2. Verfahren zum Prüfen der Reaktionsstabilität eines Halbleiter-Matrixbildgebers bestehend aus Pixeln nach Anspruch 1, **dadurch gekennzeichnet, dass** die Matrix in Elementarmaschen unterteilt ist, die eine vorbestimmte Anzahl von Pixeln umfassen, wobei das Verfahren einen Schritt des Bestimmens des stabilsten Pixels in jeder Masche beinhaltet, so dass die anderen Pixel der Masche, als instabil angesehen, mit dem Pixel verbunden werden.

3. Verfahren zum Prüfen der Reaktionsstabilität eines Halbleiter-Matrixbildgebers bestehend aus Pixeln nach Anspruch 1, **dadurch gekennzeichnet, dass** die Amplitudenverteilung jedes Pixels n ein Histogramm $D_n$ ist, zentriert auf einem Mittelwert $\mu_n$, wobei der statistische Indikator ein Abweichungstyp $s_n$ ist.

4. Verfahren zum Prüfen der Reaktionsstabilität eines Halbleiter-Matrixbildgebers bestehend aus Pixeln nach Anspruch 3, **dadurch gekennzeichnet, dass** die Einordnung eines Pixels in eine Pixelkategorie so realisiert wird, dass der Wert des Verhältnisses $s_n/\mu_n$ kleiner ist als eine vorbestimmte Schwelle.

5. Verfahren zum Prüfen der Reaktionsstabilität eines Halbleiter-Matrixbildgebers bestehend aus Pixeln nach Anspruch 3, **dadurch gekennzeichnet, dass** die Matrix in Elementarmaschen zerlegt wird, die eine vorbestimmte Anzahl von Pixeln umfassen, wobei das Pixel der Masche der kleinste Wert des Verhältnisses $s_n/\mu_n$ ist, der zur ersten Pixelkategorie gehört, wobei die anderen Pixel der Masche zur zweiten Pixelkategorie gehören.

6. Verfahren zum Prüfen der Reaktionsstabilität eines Halbleiter-Matrixbildgebers bestehend aus Pixeln nach Anspruch 1, **dadurch gekennzeichnet, dass** das vorbestimmte Kriterium die geringste Distanz ist, die das instabile Pixel vom nächsten stabilen Pixel trennt.

7. Verfahren zum Prüfen der Reaktionsstabilität eines Halbleiter-Matrixbildgebers bestehend aus Pixeln nach den Ansprüchen 1 und 5, **dadurch gekennzeichnet, dass** das vorbestimmte Kriterium die Zugehörigkeit zu derselben Masche ist.

8. Verfahren zum Prüfen der Reaktionsstabilität eines Halbleiter-Matrixbildgebers bestehend aus Pixeln nach Anspruch 1, 6 oder 7, **dadurch gekennzeichnet, dass** die Korrektur des durch jedes instabile Pixel erzeugten Signals durch Multiplizieren des Signals des instabilen Pixels mit einem konstanten Koeffizienten proportional zu dem von dem stabilen Pixel gelieferten Signal gewährleistet wird, mit dem das instabile Pixel assoziiert ist.

9. Verfahren zum Prüfen der Reaktionsstabilität eines Halbleiter-Matrixbildgebers bestehend aus Pixeln nach Anspruch 1, 6 oder 7, **dadurch gekennzeichnet, dass** die Korrektur des von jedem instabilen Pixel erzeugten Signals während eines gegebenen Zeitintervalls durch Multiplizieren des Signals des instabilen Pixels mit einem Koeffizienten proportional zum Mittelwert des von dem stabilen Pixel gelieferten Signals, mit dem das instabile Pixel assoziiert ist, während desselben Zeitintervalls gewährleistet wird.

## Claims

1. Method of controlling the stability of response of a semi-conductor matrix imager composed of pixels (P), the method comprising at least a first phase of characterizing the said stability and a second phase of correcting the said stability, **characterized in that** the said first phase comprises the following steps:

   - irradiation of the pixels of the detector by a standard radiation that is constant over time for a predetermined duration;
   - storage of the signals (S) supplied by each pixel at regular time intervals during the predetermined duration;
   - determination, for each pixel, of an amplitude distribution of the signals supplied by each pixel during the predetermined duration;
   - characterization of each distribution by at least one statistical indicator representative of the dispersion of the distribution;
   - classification of each pixel, on the basis of this indicator, into at least two categories of pixels, each category being representative of the stability of the temporal response of the pixels, the pixels belonging to the first category being denoted "stable pixels", the pixels belonging to the second category being denoted "unstable pixels";

   the second phase comprises the following steps:

   - association of each unstable pixel with at least one stable pixel according to a predetermined criterion;
   - irradiation of the pixels of the detector by a radiation to be characterized during a second predetermined duration;
   - storage of the signals supplied by each pixel for at least one time interval taken during the second predetermined duration;

- correction of the signal or signals generated by each unstable pixel as a function of the signal or signals generated by the stable pixel with which the unstable pixel is associated.

2. Method of controlling the stability of response of a semi-conductor matrix imager composed of pixels according to claim 1, **characterized in that** the matrix is decomposed into elementary mesh cells comprising a predetermined number of pixels, the method comprises a step for determining the most stable pixel in each mesh cell so that the other pixels of said mesh cell which are considered to be unstable are linked to the pixel.

3. Method of controlling the stability of response of a semi-conductor matrix imager composed of pixels according to claim 1, **characterized in that** the amplitude distribution of each pixel n is a histogram $D_n$ centred on a mean value $\mu_n$, the statistical indicator being a standard deviation $s_n$.

4. Method of controlling the stability of response of a semi-conductor matrix imager composed of pixels according to claim 3, **characterized in that** the classification of a pixel into a category of pixels is carried out depending on whether the value of the ratio $s_n/\mu_n$ is below a predetermined threshold.

5. Method of controlling the stability of response of a semi-conductor matrix imager composed of pixels according to claim 3, **characterized in that** the matrix is decomposed into elementary mesh cells comprising a predetermined number of pixels, the pixel of the said mesh cell having the lowest value of the ratio $s_n/\mu_n$ belonging to the first category of pixels, the other pixels of the mesh cell belonging to the second category of pixels.

6. Method of controlling the stability of response of a semi-conductor matrix imager composed of pixels according to claim 1, **characterized in that** the predetermined criterion is the smallest distance separating the unstable pixel from the closest stable pixel.

7. Method of controlling the stability of response of a semi-conductor matrix imager composed of pixels according to claims 1 and 5, **characterized in that** the predetermined criterion is belonging to the same mesh cell.

8. Method of controlling the stability of response of a semi-conductor matrix imager composed of pixels according to any one of claims 1, 6 or 7, **characterized in that** the correction of the signal generated by each unstable pixel is ensured by multiplying the said signal of the unstable pixel by a constant coefficient proportional to the signal supplied by the stable pixel with which the unstable pixel is associated.

9. Method of controlling the stability of response of a semi-conductor matrix imager composed of pixels according to any one of claims 1, 6 or 7, **characterized in that** the correction of the signal generated by each unstable pixel during a given time period is ensured by multiplying the said signal of the said unstable pixel by a coefficient proportional to the mean value of the signal supplied by the stable pixel with which the unstable pixel is associated during the same time period.

# FIG. 1

# FIG. 2

| IRRADIATION DES PIXELS |
|:---:|

$\downarrow$

| MEMORISATION DES SIGNAUX |
|:---:|

$\downarrow$

| DETERMINATION DES DISTRIBUTIONS |
|:---:|

$\downarrow$

| CARACTERISATION DES DISTRIBUTIONS |
|:---:|

$\downarrow$

| CLASSEMENT DES PIXELS |
|:---:|

# FIG. 3

# FIG. 4

ASSOCIATION PIXELS STABLES/INSTABLES

IRRADIATION DES PIXELS

MEMORISATION DES SIGNAUX

CORRECTION DES SIGNAUX INSTABLES

# FIG. 5

$P_S 1$

$P_{INS} 1$

$P_{INS} 2$

$P_S 2$

Maille

# FIG. 6

**EP 2 434 752 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1795918 A2